(19) Europäisches Patentamt
European Patent Office
Office européen des brevets

(11) Publication number: 0 068 727 A1

(12) EUROPEAN PATENT APPLICATION

(21) Application number: 82303136.4

(22) Date of filing: 16.06.82

(51) Int. Cl.³: H 02 K 3/487, H 02 K 15/00

(30) Priority: 29.06.81 US 278290

(43) Date of publication of application: 05.01.83 Bulletin 83/1

(84) Designated Contracting States: DE FR GB SE

(71) Applicant: GENERAL ELECTRIC COMPANY, 1 River Road, Schenectady New York 12305 (US)

(72) Inventor: Olson, Hjalmar Albert, 5195 E. Meehl Road, North East Pennsylvania 16428 (US)

(74) Representative: Wood, Anthony Charles et al, c/o MICHAEL BURNSIDE & PARTNERS 2 Serjeants' Inn Fleet Street, London EC4Y 1HL (GB)

(54) **Method and means for retaining coils in dynamoelectric machines.**

(57) A method of retaining electromagnetic coils in a plurality of parallel slots in a ferromagnetic core and the resultant product thereof, which involves placing flexible members of non-conductive fibrous material impregnated with a thermally curable resin on top of insulated conductors that are disposed in internal sections of the respective core slots, applying pressure to externally exposed portions of said flexible members to push the same into the core slots and thereby to seat the conductors in the internal sections of the core slots, and thereafter thermally curing said resin so that said members become rigid wedge means for closing the slot openings and firmly locking the insulated conductors in place.

24
25
23
9
20
10
12
12
2
4
7a

EP 0 068 727 A1

# METHOD AND MEANS FOR RETAINING COILS IN DYNAMOELECTRIC MACHINES

## Background of the Invention

This invention relates to a new method and means for retaining electromagnetic coils in ferromagnetic core slots of dynamoelectric machines, and it also relates to dynamoelectric machines having new and improved coil retaining means.

Various means and methods have been heretofore suggested for retaining the coils of motors and other electrical machines or apparatus fixed within the slots of rotors or stators. In large, relatively high horsepower machines, each armature coil typically is formed by winding or bending a plurality of long, thin bars of electroconductive material (e.g., copper) into general rectilinear loops or turns whose opposite sides are straight and parallel, covering the individual turns with suitable dielectric material, and then wrapping at least two juxtaposed turns in insulating tape. The bundle of conductors forming one of the straight sides of the coil is put inside one of a plurality of parallel slots located in the armature core, and the corresponding side of each of a plurality of additional coils is inserted in turn in each of the other core slots. Subsequently the taped bundles of conductors forming the opposite sides of all of the coils are placed in the respective slots on top of the previously inserted bundles. All of the insulated conductors are then securely locked in their shared slots by suitable closure members, sometimes referred to as slot wedges or top sticks.

Generally, a slot wedge is a thin piece or rigid insulating material having beveled edges that fit into locking recesses or grooves provided in the sidewalls of each slot near the surface of the core. The function of the slot wedges is to retain the coils of the machine snugly and firmly in their respective core slots. Such wedges must have sufficient physical strength to resist without damage any and all forces exerted on them during their initial insertion into the slots and during the subsequent operation of the machine. A wedge in a rotating armature of a high-speed machine, for example, must have sufficient shear strength to resist the centrifugal forces exerted by the coils as the armature rotates. A slot wedge must also have appropriate corner definition to ensure a tight fit in the wedging grooves, and it must occupy as little space as possible in the core slot. Fabricating such a wedge is by no means a simple matter. Materials which are thin enough to meet the slot space requirements may not have the required mechanical qualities of rigidity, shear strength, and satisfactory corner definition.

Generally, prior art slot wedges had been made from asbestos-phenolic, glass-phenolic, glass-epoxy, glass-polyester, or melamine-glass materials. There are two well known methods of forming such materials into individual slot wedges. One method comprises placing the raw material in a die having the desired shape and dimensions and then curing it by applying heat and pressure. If magnetic properties are desired, iron particles can be added to the material prior to molding the slot wedges in this manner. See U.S. patent No. 1,684,255, Russian patent 414,681, and British patent 261,816. An alternative known method includes the steps of sawing long strips from a flat, hard sheet or laminate of pre-molded material such as Textolite®, milling opposite edges of each strip to bevel the same, and cutting the strips to the desired length. In either method, the slot wedges are made prior to being installed in a machine, and they are sized to match the dimensional requirements of the particular machine in which they are intended to be used. Thus the prior art pre-molded or pre-machined wedges are not universally suitable for a variety of different slot widths.

A typical prior art method of installing and retaining coils, such as the armature windings of a direct-current motor or generator, includes placing a plurality of insulated copper conductors within each of a plurality of parallel slots in the armature core and inserting a steel bar in each slot on top of these conductors. All of the steel bars, in turn, are temporarily banded by wires in tension, and the assembly is heated until the conductors that form the parallel sides of the armature coils are compactly seated in the slots. After the wire banding and steel bars are removed, the heights of the seated conductors in their respective slots may vary from slot to slot due to deviations, within permissible tolerances, in the cross sections of the various conductors, in the thicknesses of their insulation, and in the depths of the various slots. To obtain uniform gaps above the conductors in the respective slots, one or more filler strips of very thin, paper-like insulating material is placed on top of the conductors in every slot where needed, and then thin "slipper strips" having smooth, low-coefficient-of-friction surfaces are added to all of the slots. The pre-molded rigid slot wedges are now driven lengthwise into the respective slots across the tops of the slipper strips which provide sliding surfaces for the wedges while protecting the coil insulation from damage. If a wedge is not tightly captured in the wedging grooves, it is removed, one or more additional filler strips is placed under it, and the wedge is reinserted. This trial and error process of obtaining the proper fit accommodates deviations that may exist, within permissible tolerances, in the bevels and thicknesses of the various pre-molded slot wedges. Problems with such a prior art wedging method are reviewed in U.S. patent No. 3,391,294.

During normal operation of the machine, as electric current flows through these typically installed coils, part of the resulting magnetic field or flux generated by each coil does not traverse the machine air gap (i.e., the gap between the surface of the rotor and the adjacent face of the stator), and this part consequently does not link the machine windings on the other side of the gap. This can result in a relatively high value of leakage reactance. In order to minimize leakage reactance, it is usually desirable to locate the coils as near as possible to the air gap. However, the prior art coils are physically spaced from the air gap by a distance equal to the combined thicknesses of the slot wedge and of the filler and slipper strips that are disposed between the slot wedge and the coils.

In the typical prior art coil retaining method, voids are sometimes unavoidably left between the filler material and the underlying coil or the overlaying slot wedge. During machine operation, heat transfer from the hot coils to the cooler air gap is undesirably impeded by such voids, and the thicker the filler material the poorer the heat dissipation. Thus, the thermal rating of a machine can be increased by minimizing the filler material and by eliminating voids in the coil retaining means.

## Summary of the Invention

One of the general objectives of the present invention is to provide a new and improved coil retaining method for use in the manufacture of dynamoelectric machines.

Another objective is to provide a dynamoelectric machine having a slotted core in which coils are retained by new and improved slot wedges.

Another objective of the present invention is to provide novel slot wedges in a dynamoelectric machine, which wedges are made and installed by a method that is simpler and less expensive than prior art methods and that is universally applicable to a variety of different slot widths.

A further objective is to provide a new method for retaining coils in the core slots of a dynamoelectric machine, which method results in a machine wherein heat can transfer from the coils to the air gap more readily than in a machine using conventional coil retaining means.

In carrying out the invention in one form, a flexible member of non-conductive fibrous material impregnated with a thermally curable resin is placed on top of insulated copper conductors positioned within each of a plurality of core slots. Pressure is then applied to this member to push all of it inside the corresponding slot, thereby firmly seating the conductors that are located under the fibrous member in the same slot. Finally, the resin is thermally cured under pressure to render the fibrous member rigid, in which condition it is effective to retain the conductors in the slot.

The invention will be better understood and its various objects and advantages will be more fully appreciated from the following description taken in conjunction with the accompanying drawings.

Brief Description of the Drawings

Fig. 1 is an exploded isometric view of a segment of a slotted ferromagnetic core, with a plurality of insulated conductors retained in each slot by prior art slot wedges;

Fig. 2 is a schematic circuit diagram of an electrodynamic machine;

Fig. 3 is an end view of a core slot during an early step of the coil retaining method of the present invention;

Fig. 4 is an enlarged isometric view of one embodiment of a flexible fabric member that is used to form the coil retaining means according to the present invention;

Fig. 5 is another end view of the Fig. 3 core slot showing the coil retaining means in its final state at the conclusion of the method of this invention; and

Fig. 6 is an end view of a core slot in which the coil retaining means has been cured-in-place in accordance with an alternative embodiment of the present invention.

Detailed Description

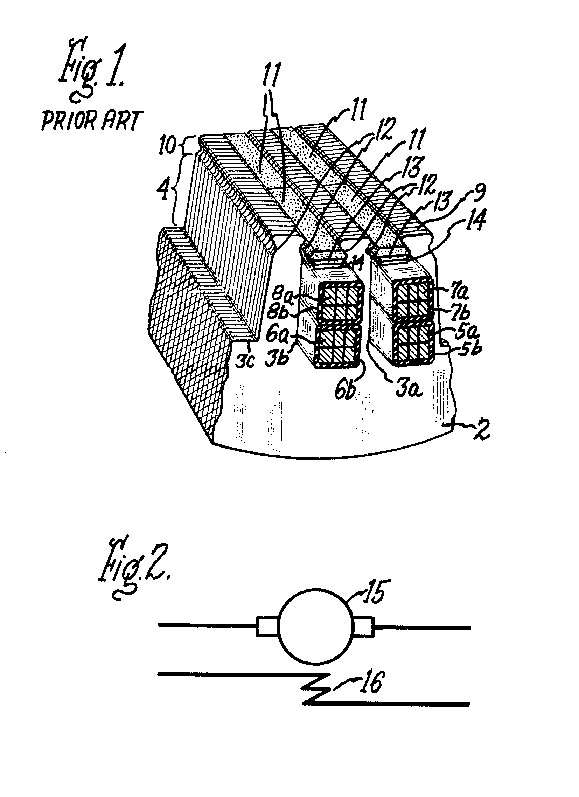

Fig. 1 is an isometric view, partially cut away, of a segment of a laminated ferromagnetic core 2 in which there are a plurality of spaced-apart, generally parallel, elongated slots 3a, 3b, and 3c. While only three core slots are indicated in Fig. 1, in practice a great many more will ordinarilly be provided.

Each of the core slots has an internal section 4 for receiving a plurality of insulated conductors that form parts of two electromagnetic coils. These conductors have generally rectangular cross sections. A first bundle 5a of conductors comprising one of the straight sides of the individual turns of a first coil is wrapped in insulating tape 5b and is inserted in the bottom of the internal section 4 of the slot 3a. A second bundle 6a of conductors comprising a corresponding straight side of the individual turns of a second coil is wrapped in insulating tape 6b and is inserted in the bottom of the internal section 4 of the next slot 3b. Subsequently a third bundle 7a of conductors comprising the other straight sides of the individual turns of a third coil, which bundle is wrapped in insulation 7b, is placed in internal section 4 of the slot 3a on top of the first bundle 5a, and a fourth bundle 8a of conductors comprising the other straight sides of the individual turns of a fourth coil wrapped in insulation 8b is placed in internal section 4 of slot 3b on top of the second bundle 6a.

Between the internal section 4 of each of the core slots 3a, 3b, and 3c and the open side of the slot, i.e., the side that registers with the surface 9 of the core 2, there is another section 10 of the slot that is adapted to receive wedge means effective to retain the bundles of conductors in the slot. Fig. 1 shows the typical prior art wedge means which comprise a plurality of rigid, flat, pre-molded wedges 11 of insulating material having beveled edges that are tightly captured in locking grooves or undercuts 12 in the sidewalls of the section 10 of each slot. After compactly seating the insulated bundles of conductors in each slot, the slot wedges 11 are physically driven lengthwise into the associated wedge receiving sections 10 across the tops of slipper strips 13 that are disposed immediately under the respective wedges. At least one thin filler strip 14 of insulating material is placed in the space between the slipper strip and the top of the insulated conductors in any slot where additional material is required to fill this space, thereby ensuring frictional retention of the wedge 11 in the locking grooves 12. The filler material is needed in most slots to compensate for dimensional disparities among the various bundles of conductors, the various premolded wedges, and/or the various slots themselves.

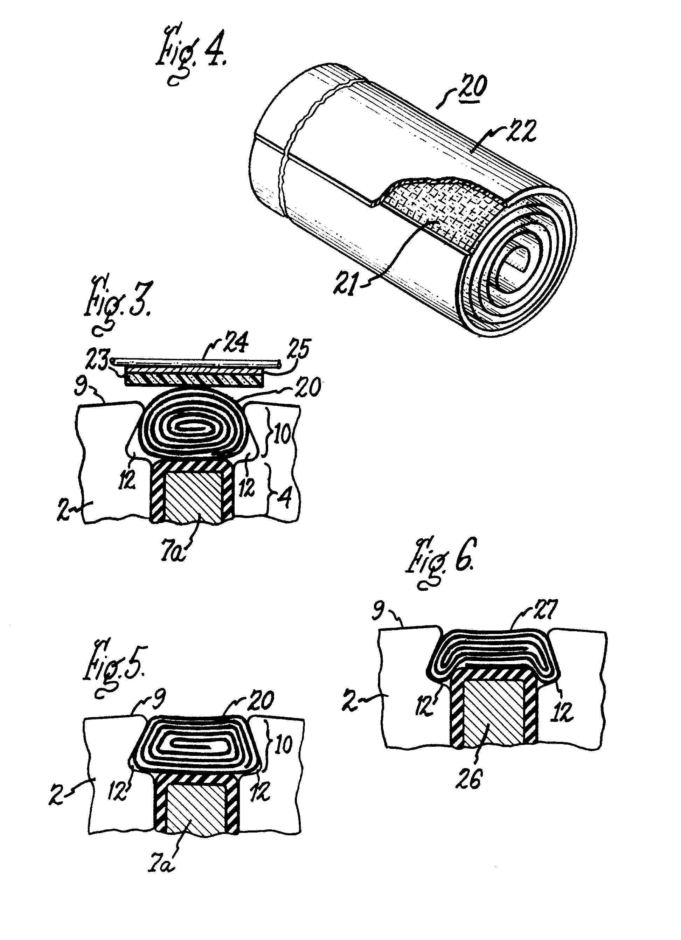

The core 2 that is shown in Fig. 1 can be part of any one of a variety of different known electrical apparatus or machines. Typically it is part of either the rotor or the stator of a rotating dynamoelectric machine. In a direct current (d-c) commutator motor, for example, the core 2 is on the cylindrical rotor of the machine and the coils in the slots 3a, 3b, 3c, etc. are armature coils. In this case, the surface 9 of the core 2 will be convex, with the slots extending radially into the core of the rotor and their long dimension paralleling the axis of the rotor. Such a machine is shown symbolically in Fig. 2 where reference number 15 refers to the armature and reference number 16 identifies the field windings. Alternatively, the core 2 can comprise the stator of an alternating current generator (sometimes referred to as an alternator), whereby the surface 9 is concave and again the long dimension of the slots parallels the axis of the machine's rotor.

The present invention, as illustrated in Figs. 3 through 6, provides an alternative method of retaining electromagnetic coils within a dynamoelectric machine by molding and curing each wedge means within the core slot, that is, by having the wedge receiving section 10 of the slot become the mold for formation therein of a rigid, effective wedge. As shown in Fig. 3, the core 2 includes a slot having juxtaposed first and second sections 4 and 10, respectively. Insulated conductors 7a have been inserted in the first or internal section 4 of the slot. The second section 10, which is located between the top of the conductors 7a and the core surface 9, is adapted to receive the wedge means that will close the slot and retain the conductors in place. It is defined by opposing walls of the slot, which walls have locking recesses 12 (preferably lateral grooves coextensive with the length of the slot) for capturing the associated wedge means.

In accordance with the method of the present invention, a flexible member 20 of non-conductive fibrous material impregnated with a thermally curable resin is placed in the wedge receiving section 10 of the core slot. The initial dimensions of this member are such that it covers the conductors 7a and partially protrudes above the surface 9 of the core.

As is best seen in Fig. 4, the flexible member 20 preferably comprises a non-conductive fabric or cloth 21 impregnated with a semi-cured, thermally curable resin, which fabric is rolled into a multilayered roll having an outside diameter slightly larger than the width of the core slot and an axial length substantially the same as the slot length. This roll is wrapped in a cover 22 of thin, non-tacky, non-conductive flexible material. The fabric 21 is woven from suitable fibers which, when rigidly bonded by the cured resin impregnant, will form a matrix construction for reinforcing the wedge means.

The fibers in the fabric 21 can be either short or long, woven or felted. Iron particles could be included if a magnetic wedge were desired. The type of fiber selected depends, in part, on the anticipated operating temperature which the wedge means will experience. For example, glass or aramid fibers can be employed in d-c motors for industrial or railroad applications where the maximum operating temperature can range from 180°C. to 220°C. It is, however, preferable that the fabric comprise an array of parallel fibers oriented perpendicular to the axis of the roll and hence transverse to the length of the core slot, which orientation enables the member 20 when cured to most effectively resist shear stress caused by the centrifugal force that urges the coils in a radially outward direction (assuming that the coils are armature coils in the rotor core of a high-speed d-c motor). While the illustrated flexible member 20 is a rolled cloth 21, it can alternatively be of other multilayered forms, such as a fabric folded in a zigzag pattern. It should be slightly wider than the open side of the slot before being pushed into the wedge receiving section 10 where it will be cured under heat and pressure. As a further alternative, loose fibers mixed with resin to form a putty-like member could be placed in each wedge receiving section.

The resin which impregnates the member 20 can be a conventional thermally curable resin such as a thermosetting resin or a thermoplastic resin containing thermally operative chemical curing agents. In particular, semi-cured plastic resins, such as but not limited to silicone, epoxy or polyester, are preferred inasmuch as they can be more easily handled than wholly uncured resins. Such semi-cured resins are somewhat sticky or gummy but will not run, and they are known in the trade as partially cured or "B stage" resins.

In one practical embodiment, the member 20 comprises a rolled, glass fiber cloth 21 impregnated with a polyester resin that has been partially but not fully cured and covered with a sheet 22 of Mylar or other suitable non-conductive material. Alternatively, a completely uncured resin rather than a semi-cured resin could be used, in which case the cover 22 will prevent liquid resin from leaking out of the flexible member 20. The cover of Mylar (or other similar polymeric material) provides a non-tacky outer surface that facilitates handling the member 20 and pushing it into the wedge receiving section 10 of the core slot, and it contains the resin during the subsequent curing step when the elevated temperature will cause the resin to soften prior to attaining a hardened state. Without such a cover or wrapper, the relatively sticky surface of the semi-cured rolled fabric 21 would be difficult to handle. The outer cover 22 can be placed around the resin-impregnated roll of fabric 21 prior to placing the composite member 20 in the core slot. Alternatively, the sheet of Mylar need not fully encircle the fabric roll and, if desired, it can cover only the top of the member 20 where it will act as a release agent between this member and the external means that applies pressure during the curing step.

With a flexible member 20 on top of the conductors 7a and within the wedge receiving section 10 of the slot, pressure is applied to an externally exposed portion of this member so as to push it entirely inside the section 10. One way of doing this is to clamp a slightly curved pad 23 of resilient material such as silicone rubber over the member 20 and to apply pressure to the pad 23 via a compression wire band 24 and a steel plate 25, as is indicated in Fig. 3. When the wire band 24 is tightened, it exerts a downward force on the steel backing plate 25 which in turn causes the pad 23 to move into contact with the core surface 9 on opposite sides of the slot opening. This forces the whole flexible member 20 into the slot section 10 and into the locking recesses 12. The member 20 is now disposed in intimate, substantially void-free contact with the top conductor and the walls of the wedge receiving section 10, with its cross section closely conforming to that of the section 10, including the locking recesses 12. In the process of being pushed into section 10, the member 20 in turn exerts pressure on the bundle 7a of insulated conductors, thereby firmly seating all of the conductors in the internal section 4 of the associated slot. Pressure can alternatively be applied by hydraulic, pneumatic, magnetic, or other suitable means.

Thereafter the resin in the fibrous member 20 is thermally cured, as by placing the whole core 2 in a conventional industrial oven, by resistance heating, that is, by passing electric current through the coils, by heating the backing plate 25, or by other well-known means. The pressure on the member 20 is maintained during this curing step of the method, and since the heat somewhat softens the coil insulation, this pressure will further compact the coils in the internal sections of the slots. In one practical embodiment of the invention, a flexible member comprising a Mylar-covered roll of glass fiber cloth impregnated with a semi-cured, thermosetting polyester resin was baked in an oven at 180°C., with a tension of 400 Kg. on a steel wire band 24 having a diameter of 0.255 cm., for a period of two hours. Once cured in this manner, the fibrous member 20 becomes a rigid wedge means in the wedge receiving section 10 of the associated core slot. The wedge means is then cooled, and the pressure applying means is removed. The cured member 20 is a rigid, strong, dimensionally stable, unitary member having a finished cross-section as illustrated in Fig. 5. Its bottom and sides are substantially congruent, respectively, with the top of the conductors 7a that are located in the internal section of the associated slot and with the walls of the wedge receiving section 10 of the same slot. The surface of the cured member 20 is depressed slightly below the core surface 9, for example, by approximately 0.05 cm. Due to variable space between the top of the insulated conductors 7a and the surface 9, the size of this depression may vary from slot to slot, but the thickness of the cured member 20 is substantially constant.

While the method of the present invention has been described and illustrated (Figs. 3-5) in connection with a single core slot, it will be understood that practical machines have a plurality of slots and a like number of flexible fibrous members 20. The thermal curing step of the method can begin after all of the flexible members are pushed into their respective slots. Alternatively, the pressure applying and thermal curing steps can be interleaved so that flexible members previously placed in some of the slots are being cured at the same time that flexible members are being inserted in other slots for later curing. In any event, unlike prior art methods, there is no separate step of seating the coils in the slots, because in the present invention this is accomplished coincidently with the steps of pushing the member 20 into the associated slot and then curing it by the application of heat and pressure.

It will now be apparent that in practicing the present invention the wedge means are molded and thermally cured while in the core slots, that is, the slot wedges are molded and cured in place. The resulting wedge means obviates the need for inserting filler material, such as the slipper strips and the filler strips used in the prior art, between the slot wedges and the coils. Because it was cured in place within the slot, the wedge means automatically compensates for any irregularities or disparities in the cross sectional dimensions of the coils and/or the slots, and a tailor-made tight fit is ensured. In contrast to the prior art wedging method, this desired result does not depend on human judgment that the slot wedge is neither too loose nor too snug. The flexible member of rolled fabric or the like from which each wedge means is made is universally suitable for a variety of machines having different slot widths. The substantially void-free contact between the cured-in-place wedge means and the sidewalls of the wedge receiving section 10 of the slot (including the locking recesses 12) ensures a relatively large area of engagement between these parts and thereby optimizes the coil retaining strength of the wedge. The substantially void-free contact between the wedge means and the coils, the elimination of the prior art slipper and filler strips, and the relatively constant thickness of the finished wedge will materially improve the transfer of heat from the coils to the air gap of the machine. Consequently there is room for larger conductors in the slots, and the machine can safely operate with higher current density in its coils.

In Fig. 6 an alternative embodiment of the invention is shown. It differs from Fig. 5 in that the top of the insulated bundle 26 of conductors that are disposed in the internal section of the slot is closer to the surface 9 of the slotted core 2, thereby reducing the value of the leakage reactance of the machine. Consequently in Fig. 6 the cross-sectional configuration of the wedge receiving section of the slot resembles an inverted U. The cured-in-place wedge means of the present invention (reference number 27 in Fig. 6) easily conforms to this particular configuration and therefore is ideally suited for such an embodiment.

If desired, the locking recesses in the opposite sidewalls of the wedge receiving section 10 of each core slot can have configurations different than the grooves 12 shown in Figs. 1 and 3-5. An equivalent locking arrangement that can be used in lieu of the grooves 12 is to have slightly converging sidewalls near the core surface 9, whereby the slot is not as wide at its open side as it is immediately above the insulated conductors. In another alternative, the locking recesses can have a non-conventional shape or location in the sidewalls of the wedge receiving section 10.

Claims

1. A method for retaining electromagnetic coils within a plurality of spaced-apart, generally parallel, elongated slots in a ferromagnetic core, each of said slots having an internal section for receiving a plurality of insulated conductors that form parts of at least two of said coils and another section between said internal section and the open side of the slot for receiving wedge means effective to retain said conductors in the slot, comprising the steps of:

(a) inserting said conductors in said internal section of each of said slots;

(b) placing in the respective wedge receiving sections of said slots flexible members of non-conductive fibrous material impregnated with a thermally curable resin;

(c) applying pressure to externally exposed portions of said flexible members so as to push said members entirely inside said wedge receiving sections and thereby to seat said conductors in said internal sections; and

(d) thereafter thermally curing said resin so that said members become rigid wedges means in said wedge receiving sections of said core slots.

2. The method of claim 1 in which said thermally curing step takes place while maintaining pressure applied to said flexible members.

3. The method of claim 1 in which said pressure applying step forces each flexible member into intimate, substantially void-free contact with the top conductor and the walls of the wedge receiving section of the associated slot.

4. The method of claim 1 in which each of said flexible members comprises a multilayered fabric having an array of parallel fibers which are oriented transverse to the length of the associated slot.

5. The method of claim 4 in which each of said flexible members comprises a roll of nonconductive cloth.

6. The method of claim 5 in which each cloth roll is covered with a non-tacky flexible material prior to being placed in the wedge receiving section of the associated slot.

7. For retaining electromagnetic coils within a plurality of spaced-apart, generally parallel, elongated slots in a ferromagnetic core of a dynamoelectric machine, each of said slots having an internal section for receiving a plurality of insulated conductors that form parts of at least two of said coils and another section between said internal section and the open side of the slot for receiving wedge means effective to retain said conductors in the slot, said wedge means receiving section being defined by opposing walls of the slot and said walls having locking recesses for capturing the associated wedge means, an improved method comprising the steps of:

(a) rolling glass fiber cloth impregnated with a semi-cured, thermally curable resin into a plurality of rolls each having an outside diameter larger than the width of each of said slots, with the fibers in said cloth being oriented perpendicular to the axis of the roll;

(b) inserting said conductors in the internal section of each of said slots;

(c) placing said rolls in the respective wedge receiving sections of said slots;

(d) applying pressure to externally exposed portions of said rolls so as to push said rolls entirely inside said wedge receiving sections and into said locking recesses, thereby seating said coils in said internal sections; and

(e) thermally curing said resin while maintaining pressure applied to said rolls so that said rolls become rigid wedge means in said wedge receiving sections of said core slots.

8. The method of claim 7 in which said resin is selected from a group consisting of silicones, epoxies, and polyesters.

9. The method of claim 7 in which said pressure applying step forces each roll of glass fiber cloth into intimate, substantially void-free contact with the top conductor and the walls of the wedge receiving section of the associated slot.

10. The method of claim 7 including the additional step of covering said externally exposed portions of said rolls with non-tacky material to ensure release of the pressure applying means from said wedge means after said thermal curing step.

11. A dynamoelectric machine comprising:

(a) a ferromagnetic core having a plurality of spaced-apart, generally parallel slots, each of said slots having juxtaposed first and second sections, said second section being disposed between said first section and the surface of said core;

(b) a plurality of electromagnetic coils located in the first sections of said core slots; and

(c) a plurality of wedge means respectively located in the second sections of said core slots for retaining said coils in said slots, each of said wedge means comprising a rigid, unitary, non-conductive member the bottom and sides of which are substantially congruent, respectively, with the top of the coil parts that are located in the first section of the associated slot and with the walls of said second section of the same slot.

12. The machine of claim 11 in which each rigid, unitary, non-conductive member is disposed in substantially void-free contact with said top of the coil parts that are located in the first section of the associated slot and with the walls of said second section of the same slot.

13. The machine of claim 11 in which each rigid, unitary, non-conductive member comprises a multilayered glass fiber cloth impregnated with a resin that was cured after the cloth was placed in the second section of the associated slot.

14. The machine of claim 13 in which the fibers in said cloth are oriented transverse to the long dimension of the associated slot.

Fig. 1.
PRIOR ART
11
11
12
11
13
12
13
9
14
10
4
8a
8b
6a
3c
3b
7a
7b
5a
5b
6b
3a
2

Fig. 2.
15
16

0068727

Fig. 4.
20
22
21
Fig. 3.
24
25
23
9
20
10
12
12
4
2
7a
Fig. 6.
9
27
2
12
12
26
Fig. 5.
9
20
10
2
12
12
7a

European Patent Office

# EUROPEAN SEARCH REPORT

0068727

Application number

EP 82 30 3136

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-4 200 818 (RUFFING et al.)<br><br>* Column 3, lines 53-66; column 4, lines 24-39; column 5, line 55 - column 6, line 33 * | 1,5,7, 8,11-13 | H 02 K 3/487<br>H 02 K 15/00 |
| Y | US-A-1 891 200 (EATON)<br>* Page 1, right-hand column, lines 62-91 * | 1,3 | |
| A | US-A-3 437 858 (WHITE)<br>* Column 4, line 62 - column 5, line 2; column 5, lines 28-30 * | 8 | |
| A | US-A-1 605 112 (HUGGINS)<br>* Page 1, right-hand column, lines 88-103 * | 4,14 | |
| | | | TECHNICAL FIELDS SEARCHED (Int. Cl. 3) |
| A | US-A-3 976 902 (SIMMONDS)<br>* Column 1, lines 51-53; figure * | 8,11 | H 02 K<br>B 32 B |
| A,D | US-A-1 684 255 (BERGMAN) | | |
| A,D | SU-A- 414 681 | | |
| A,D | GB-A- 261 816 (THOMSON-HOUSTON) | | |

-/-

The present search report has been drawn up for all claims

| Place of search | Date of completion of the search | Examiner |
|---|---|---|
| THE HAGUE | 08-10-1982 | TANGOCCI A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent Office

# EUROPEAN SEARCH REPORT

0068727

Application number

EP 82 30 3136

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A,D | US-A-3 391 294 (MOXIE)<br>----- | | |
| | | | TECHNICAL FIELDS SEARCHED (Int. Cl. 3) |

The present search report has been drawn up for all claims

| Place of search | Date of completion of the search | Examiner |
|---|---|---|
| THE HAGUE | 08-10-1982 | TANGOCCI A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82